# EUROPÄISCHE PATENTANMELDUNG

(11) **EP 2 735 857 A1**
(43) Veröffentlichungstag der Anmeldung: **28.05.2014**
(21) Anmeldenummer: 13194059.5
(22) Anmeldetag: 22.11.2013
(51) Int. Cl.: G01M 9/06, B05B 1/20, G01P 13/02

(54) **Vorrichtung zur Erzeugung von Nebel, Verteilervorrichtung hierfür, Verfahren zum Erzeugen einer Mehrzahl von Nebelstrahlen und Verfahren zum Konstruieren einer Verteilervorrichtung für Nebelstrahlen**

(30) Priorität: 23.11.2012 DE 102012023342
(71) Anmelder: Technische Hochschule Nuernberg Georg-Simon-Ohm, 90489 Nuernberg (DE)
(72) Erfinder: Schmid, Markus, 90559 Burgthann (DE); Ganser, Christian, 90408 Nuernberg (DE)
(74) Vertreter: Louis Pöhlau Lohrentz

(57) **Zusammenfassung**

Zur Erzeugung einer Mehrzahl von Nebelstrahlen wird davon abgegangen, mehrere unabhängige Vorrichtungen zum Erzeugen jeweils eines Nebelstrahls, der aus einer sogenannten Nebellanze (22) austritt, zu verwenden. Stattdessen wird eine Verteilereinrichtung (200) vorgesehen, die z.B. ein Hauptrohr (32) und mehrere Auslassrohre (34) aufweist, so dass zumindest zwei Auslässe zum jeweiligen Ermöglichen des Austretens des erhitzten Fluids aus der einen Vorrichtung (100) ermöglicht ist und mehrere Nebelstrahlen (40) erzeugt werden. Diese Nebelstrahlen (40) können feiner als bisher verwendete Nebelstrahlen sein und daher zur Auflösung von Strömungsdetails in bisher nicht gekanntem Maße dienen.

## Beschreibung

Die Erfindung betrifft eine Vorrichtung zum Erzeugen von Nebel, insbesondere in Form von Strahlen (wie man sie in einem Windkanal erhält). Sie betrifft auch eine Verteilervorrichtung zum Nachrüsten einer bereits bekannten Vorrichtung zum Erzeugen von Nebel. Die Erfindung betrifft ferner ein Verfahren zum Erzeugen einer Mehrzahl von Nebelstrahlen für die Sichtbarmachung von Stromlinien in einer Windkanalvorrichtung. Ferner betrifft die Erfindung ein Verfahren zum Konstruieren der o. a. Verteilervorrichtung zum Nachrüsten.

Die Erfindung gehört zum technischen Gebiet der Sichtbarmachung von Luft- bzw. Gasströmungen. Üblicherweise erfolgt dies an einem in einem Windkanal platzierten Objekt. Im Windkanal werden Nebelstrahlen zur Sichtbarmachung von Luft- bzw. Gasströmungen eingesetzt. Aus einem Fluidbehälter wird ein geeignetes Fluid entnommen und in einer Heizeinrichtung erhitzt. Aus der Heizeinrichtung wird das Fluid einer sog. Nebellanze zugeführt, d. h. einer Art Rohr mit z. B. konischem freien Ende oder dergleichen. Die Nebellanze hat an ihrem Auslassende typischerweise einen Durchmesser von 1,5 mm. Der aus dem Auslass der Nebellanze austretende Nebelstrahl ist somit in der Regel relativ dick. Bei kleinen Objekten ist der Nebelstrahl relativ groß im Verhältnis zu den Details der Luft- bzw. Gasströmungen, so dass die Visualisierung erschwert ist. Bei großen Objekten kann nur ein begrenzter Bereich derselbigen umlaufenden Strömung visualisiert werden. Möchte man einen größeren Strömungsbereich untersuchen, so setzt man bisher mehrere Vorrichtungen ein, mit jeweiligem Fluidbehälter, Heizeinrichtung und einer jeweils zugehörigen Nebellanze.

Die Aufgabe der Erfindung besteht darin, einen Weg aufzuzeigen, wie eine Luft- oder Gasströmung insgesamt über ein größeres Volumen hinweg und/oder detailgenauer dargestellt werden kann.

Die Aufgabe wird durch eine Vorrichtung zum Erzeugen von Nebel gemäß Patentanspruch 1 gelöst, durch eine Verteilervorrichtung gemäß Patentanspruch 10, durch ein Verfahren gemäß Patentanspruch 13 und durch ein Verfahren gemäß Patentanspruch 15.

Bei der erfindungsgemäßen Vorrichtung zum Erzeugen von Nebel (insbesondere in Form von Strahlen, nämlich in einem Windkanal), ist somit ein Fluidbehälter vorgesehen, der zur Aufnahme eines für die Erzeugung von Nebelpartikeln durch Erhitzen geeigneten Fluids dient (insbesondere geeignet hierfür ausgehend von Zimmertemperatur in dem Raum, in dem Nebel in Form von Nebelstrahlen erzeugt werden soll). Eine Heizeinrichtung dient zum Erhitzen von Fluid in dem Fluidbehälter bzw. von aus dem Fluidbehälter entnommenem Fluid. Ferner ist eine Verteilereinrichtung vorgesehen, welche mindestens zwei Auslässe zum jeweiligen Ermöglichen des Austretens erhitzten Fluids aus der Vorrichtung aufweist.

Durch das Vorsehen einer Verteilereinrichtung kann ein- und derselbe Fluidbehälter mit derselben Heizeinrichtung zur Erzeugung gleich mehrerer Nebelstrahlen (für jeden Auslass eines Nebelstrahls) eingesetzt werden. Insbesondere ist es möglich, einzelne Nebelstrahlen kleiner zu machen als im Stand der Technik, um so mit derselben Menge an Fluid eine feinere Auflösung zu erzielen. Es ist auch möglich, den Fluidbehälter und die Heizeinrichtung zum Generieren von Nebelfluid in erhitzter Form in größerer Menge einzusetzen, um ein größeres Volumen mit Nebel zu beaufschlagen.

Bei der bevorzugten Ausführungsform der Erfindung weist die Verteilereinrichtung ein Hauptrohr auf, von dem für jeden Auslass ein Auslassrohr weg steht. In einer weiter bevorzugten Ausführungsform stehen alle Auslassrohre in der gleichen Richtung weg.

Es handelt sich um eine besonders einfache Ausführungsform, die leicht herstellbar ist und dennoch eine wirksame Erzeugung von Nebel gewährleisten kann.

Insbesondere, wenn das Hauptrohr einen im Wesentlichen kreisförmigen Querschnitt aufweist, ist bevorzugt vorgesehen, dass ein freies Ende eines Auslassrohrs und bevorzugt jedes Auslassrohrs in einer sich gegenüber einer Richtung radial von dem Hauptrohr weg um einen Anstellwinkel verschiedenen Richtung weg steht, wobei der Anstellwinkel bevorzugt zwischen 10° und 40° beträgt, besonders bevorzugt zwischen 20° und 30° beträgt. Bei dieser Ausgestaltung ist vermieden, dass das Hauptrohr selbst aufgrund seines Windschattens turbulente Wirbel erzeugt, die ein gleichmäßiges Austreten von Nebelfluid aus den Auslassrohren stören würden.

Bei typischen Abmessungen eines Windkanales und typischen darin vermessenen Objekten ist bevorzugt eines und bevorzugt jedes dieser Auslassrohre zwischen 2 und 20 mm, bevorzugt zwischen 5 und 15 mm lang und/oder ein und bevorzugt jedes Auslassrohr hat einen Innendurchmesser von kleiner oder gleich 1 mm, bevorzugt von kleiner oder gleich 0,8 mm, ganz besonders bevorzugt von kleiner oder gleich 0,6 mm. Bei den gewählten Längenangaben ist für eine besonders gute Führung der einzelnen Nebelstrahlen gesorgt. Die genannten kleinen Innendurchmesser gewährleisten einen besonders feinen Nebelstrahl.

Bevorzugt beträgt der Abstand zwischen den Auslassrohren jeweils zwischen 20 und 50 mm, besonders bevorzugt zwischen 35 und 45 mm. Diese Abstände sind - insbesondere auch in Verbindung mit oben genannten Abmessungen der Auslassrohre - bei einem typischen Nebelfluid, dessen Temperatur an einer Austrittsstelle etwa 300°C betragen soll, in besonderem Maße geeignet.

Das lässt sich noch genauer durch die Vorschrift spezifizieren, dass die Abmessungen des Hauptrohrs und der Auslassrohre und die Anordnung von Auslassrohren an dem Hauptrohr derart aufeinander abgestimmt sind, dass an demjenigen Auslassrohr, an dem das erhitzte Fluid die niedrigste Temperatur (im Vergleich zur Temperatur an (allen) anderen Auslassrohren) erreicht, diese niedrigste Temperatur bei vorbestimmten Umweltbedingungen und vorbestimmten Betriebsbedingungen bezüglich des Fluidbehälters und/oder der Heizeinrichtung zur Erzeugung und Abgabe eines Nebelstrahles an diesem Auslassrohr ausreicht. Bei einer typischen Temperaturverteilung über das Hauptrohr hinweg muss also auch noch bei dem von einer Eintrittsstelle des Fluids in das Hauptrohr am fernsten gelegenen Auslassrohr gewährleistet sein, dass dort die Temperatur oberhalb der Kondensationstemperatur des Nebelfluids liegt, damit nicht eine Kondensation innerhalb eines Abschnitts des Hauptrohrs oder des letzten Auslassrohrs erfolgt. Das Nebelfluid würde in diesem zu vermeidenden Betriebszustand aus den Auslassrohren in flüssigem Zustand als Tropfen und nicht in dem gewünschten gasförmigen Zustand austreten.

Alternativ oder ergänzend zu dieser Maßnahme kann vorgesehen sein, dass ein Auslassrohr einen die Temperatur des Auslassrohrs oder des aus ihm austretenden Fluids indirekt (z. B. über die Messung der Windgeschwindigkeit) messenden Sensor oder direkt messenden Temperatursensor aufweist, welcher mit einer Steuereinrichtung gekoppelt ist, die die Heizeinrichtung und/oder eine die Fluidentnahme aus dem Fluidbehälter beeinflussende sonstige Einrichtung derart anzusteuern ausgelegt ist, dass die mittels des Sensors ermittelten Messwerte bzw. die diesen Messwerten zugeordneten Temperaturwerte in einem vorbestimmten Intervall bzw. Bereich bleiben. Mit anderen Worten kann eine Regelung der Temperatur an besagtem Auslassrohr unter Einsatz des jeweiligen Sensors erfolgen. Durch die Regelung sind die Bedingungen für die Temperaturverteilung in dem Hauptrohr und an den Auslassrohren festgelegt (zumindest innerhalb bestimmter Grenzen), so dass man reproduzierbare Ergebnisse erhält.

Die Anzahl der Auslässe (insbesondere in Form von Auslassrohren) liegt bevorzugt zwischen 4 und 18, besonders bevorzugt zwischen 5 und 8, besonders bevorzugt beträgt sie 6. Bei einer solchen Anzahl von Nebelstrahlen lassen sich besonders schöne, aussagekräftige Strukturen an einem Objekt in einem Windkanal sichtbar machen.

Bei einer bevorzugten Ausführungsform der Erfindung trägt die Verteilereinrichtung eine Isolierung, welche ein Aerogel umfasst. Durch eine solche Isolierung wird der Benutzer der Vorrichtung, der die Verteilereinrichtung z. B. mit Hilfe seiner Hände in den Windkanal an einer geeigneten Stelle platzieren möchte, vor Verbrennungsgefahr geschützt. Zudem ist durch eine geeignete Isolierung, bei der das Aerogel vorliegend besonders effizient ist, in erhöhtem Maße für Effizienz bezüglich des Energieverbrauchs gesorgt, da eine Auskühlung der Vorrichtung verhindert wird.

Die erfindungsgemäße Verteilervorrichtung dient zum Anbringen an eine Nebellanze (wie eingangs beschrieben) eines Nebelgenerators und weist ein Anbringelement auf, ein Hauptrohr und mindestens zwei Auslassrohre (Mehrzahl von Auslassrohren), die sich von dem Hauptrohr weg erstrecken, insbesondere parallel zueinander verlaufend, also in dieselbe Richtung. Diese Verteilervorrichtung kann zum Nachrüsten eines vorhandenen Geräts ("Vorrichtung zum Erzeugen von Nebel in Form eines einzigen Nebelstrahles") dienen, um die erfindungsgemäße Vorrichtung in der bevorzugten Ausführungsform zu erhalten. Die Verteilervorrichtung kann insbesondere in einer Werkstatt leicht von Hand hergestellt werden und individuell an die Erfordernisse angepasst werden.

Bevorzugt ist zwischen dem Anbringelement und dem Hauptrohr ein knieförmiges oder winkelförmiges Rohrstück angeordnet. Durch die Führung des Fluids in der Verteilervorrichtung um einen Winkel von z. B. ca. 90° lässt sich das dann wegstehende Hauptrohr optimal so gestalten, dass es auf geeignete Weise in einem Windkanal platziert werden kann, da die Bedienperson jeden einzelnen Nebelstrahl beobachten kann.

Das Anbringelement weist bevorzugt ein Schraubgewinde (besonders bevorzugt ausgestaltet als Innengewinde) auf. Ggf. ist die Nebellanze eines bereits vorhandenen Geräts ohnehin mit einem Gegengewinde ausgestattet. Soll die Anbringung dauerhaft sein, kann auch ein Schneidgewinde vorgesehen werden.

Das erfindungsgemäße Verfahren zum Erzeugen einer Mehrzahl von Nebelstrahlen für die Sichtbarmachung von Stromlinien in einer Windkanalvorrichtung beinhaltet, dass eine einzige Einrichtung ein für die Erzeugung von Nebel (unter vorbestimmten Umweltbedingungen, z. B. Zimmertemperatur) geeignetes Fluid aus einem Fluidbehälter erhitzt und das erhitzte Fluid aus einer Mehrzahl von Auslässen, insbesondere aus Auslassrohren an einem Hauptrohr, der Strömung in dem Windkanal zugeführt wird.

Das erfindungsgemäße Verfahren beschreibt somit (in einer verallgemeinerten Form) den Einsatz etwa einer erfindungsgemäßen Vorrichtung. Naturgemäß wird auch bevorzugt bei dem Verfahren die erfindungsgemäße Vorrichtung, ggf. auch in einer der bevorzugten Ausführungsformen, eingesetzt.

Bei einer bevorzugten Ausführungsform des erfindungsgemäßen Verfahrens sind die Auslassrohre an einem Hauptrohr einer von Hand tragbaren Verteilereinrichtung vorgesehen, wobei an einer Handhabe der Verteilereinrichtung selbige derart gehalten wird, dass freie Enden der Auslassrohre in einem Winkel von zwischen 15° und 40°, bevorzugt 20° und 30° zur Strömungsrichtung in dem Windkanal stehen.

Das erfindungsgemäße Verfahren zum Konstruieren einer Verteilervorrichtung der erfindungsgemäßen Art beinhaltet, dass vorbestimmte Umweltbedingungen, insbesondere hinsichtlich der Temperatur, des vorherrschenden Luftdrucks und der Geschwindigkeit von Wind in einem Windkanal, definiert werden, dass ein Fluid ausgewählt wird, und auch ein Nebelgenerator mit einer Vorrichtung zum Erhitzen dieses Fluids sowie einer Nebellanze ausgewählt wird. Bei dem Verfahren werden die Abmessungen des Hauptrohrs und die Anzahl und Abmessungen der Auslassrohre derart gewählt, dass an jedem Auslassrohr das erhitzte Fluid unter vorbestimmten Betriebsbedingungen, ggf. nach einer Anlaufzeit, die zur Erzeugung eines Nebelstrahls an dem betreffenden Auslassrohr erforderliche Mindesttemperatur erreicht.

Nachfolgend wird die Erfindung unter Bezug auf die Zeichnung näher erläutert, in der
- Fig. 1: den Aufbau einer Vorrichtung zum Erzeugen von Nebel in Form von mehreren Nebelstrahlen gemäß einer ersten Ausführungsform der Erfindung in schematischer Darstellung veranschaulicht,
- Fig. 2a und 2b: die bei der Vorrichtung nach Fig. 1 eingesetzte Verteilervorrichtung von der Seite und von oben gesehen zeigen
- Fig. 3a: eine Ansicht auf die Verteilereinrichtung nach Fig. 2a und 2b gesehen längs der Erstreckungsrichtung des Hauptrohres zeigt und
- Fig. 3b: das Detail IIIb aus Fig. 3a im teilweisen Schnitt veranschaulicht, sowie
- Fig. 4: das Anbringelement gemäß Detail IV aus Fig. 2b im Schnitt veranschaulicht;
- Fig. 5: den Aufbau einer Vorrichtung zum Erzeugen von Nebel in Form von mehreren Nebelstrahlen gemäß einer zweiten Ausführungsform der Erfindung in schematischer Darstellung veranschaulicht.

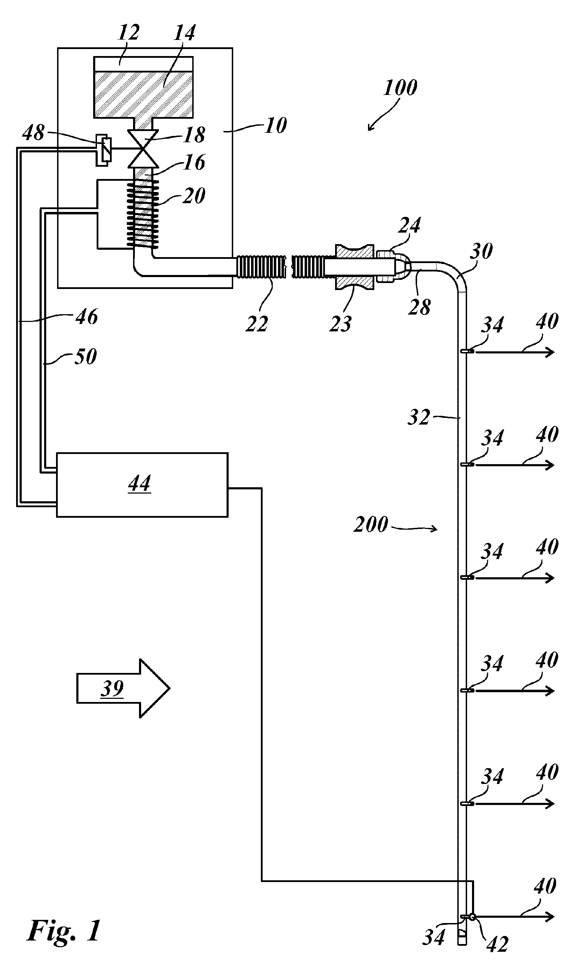

Eine im Ganzen mit 100 bezeichnete Vorrichtung zum Erzeugen von Nebel in Form von mehreren Strahlen weist eine im Ganzen mit 10 bezeichnete Einheit auf. Hierbei kann es sich um die Nebelgenerator-Controller-Sonden-Kombination vom Typ NS3-D der Firma GÜNTHER SCHAIDT SAFEX®-CHEMIE GmbH, Blankeneser Chaussee 26/32, 22869 Schenefeld, handeln. Eine solche Einheit 10 weist einen mit 12 bezeichneten Fluidbehälter für das sogenannte Nebelfluid 14 auf. Beispielsweise kann es sich um ein Gemisch aus Wasser und polyfunktionellen Oxylalkanen handeln (sog. Safex-Inside-Nebelfluid). Ein Leitungsabschnitt 16 ist dem Fluidbehälter 12 über ein Ventil 18 nachgeordnet. Das Ventil 18 kann die Menge an Fluid steuern, die in den Leitungsabschnitt 16 gelangt. Der Leitungsabschnitt 16 ist von einer Heizwicklung 20 umwickelt, um dort das Fluid zu erhitzen. Das erhitzte Nebelfluid tritt in eine sogenannte Nebellanze 22 ein. An der Nebellanze ist eine Handhabe 23 ausgebildet. Anstelle der in Fig. 1 dargestellten Schwerkraftförderung des Fluids 14 aus dem Fluidbehälter 12 kann vorgesehen sein, das Fluid 14 durch ein Treibgas zu fördern. Das Treibgas kann aus einem separaten Druckgasbehälter, der mit dem Fluidbehälter 12 verbunden ist, bereitgestellt sein oder es kann vorgesehen sein, den Fluidbehälter 12 als Druckbehälter auszubilden und in den Fluidbehälter 12 ein unter Druck stehendes Gemisch aus dem Treibgas und dem Fluid 14 einzufüllen.

Herkömmlicherweise sind vorgenannte Nebellanzen derart ausgestaltet, dass sie unmittelbar selbst in einen Windkanal gehalten werden können, so dass das in die Nebellanze 22 eingetretene Fluid aus dieser auch unmittelbar austritt.

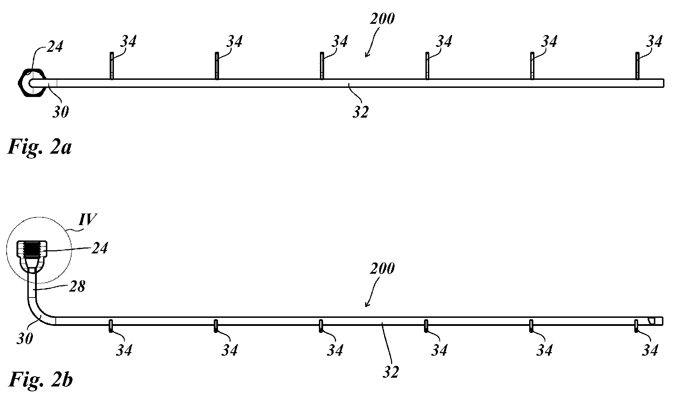

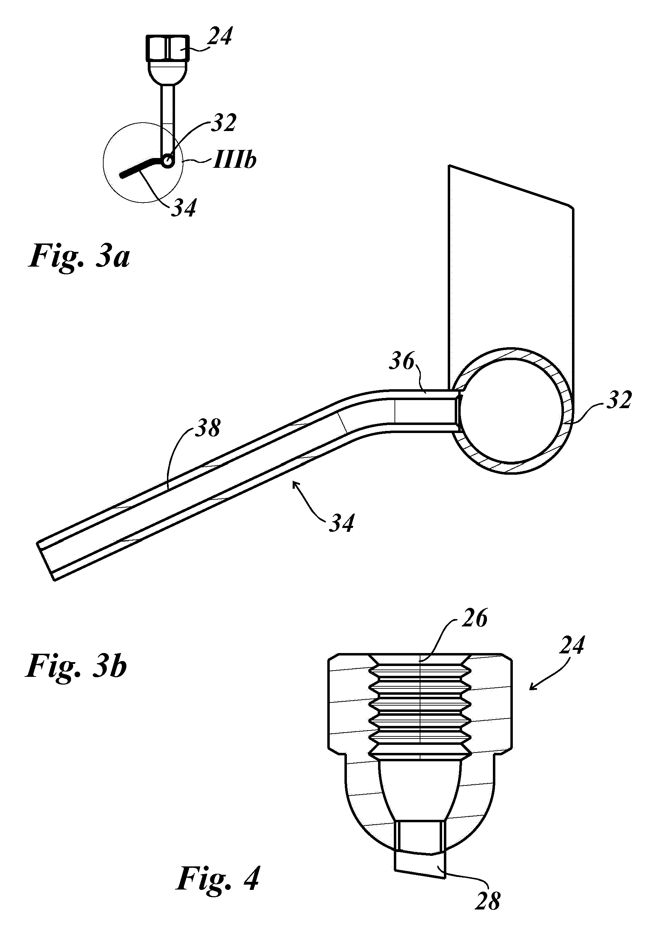

Vorliegend ist an der Nebellanze 22 eine in Fig. 2a und 2b im Ganzen gezeigte mit 200 bezeichnete Verteilervorrichtung angebracht, die auch als "Nebelrechen" bezeichnet werden kann, da sie eine Rechenform aufweist: Mit Hilfe eines Anbringelements 24 wird die gesamte Verteilervorrichtung an der Nebellanze 22 befestigt. Das Anbringelement 24 weist ein Innengewinde 26 auf, dem ein entsprechendes Außengewinde an dem Nebelrechen entspricht, oder das als Schneidgewinde ausgebildet ist. Auf der dem Innengewinde 26 abgewandten Seite ist ein Rohrstück 28 an dem Anbringelement festgehalten, und das Rohrstück 28 geht über ein Kniestück 30 oder ein (nicht gezeigtes) L-förmiges Element in ein Hauptrohr 32 über, von dem im Beispielsfalle sechs Auslassrohre 34 wegstehen. Dieses Wegstehen der Auslassrohre 34 ist in den Fig. 3a und 3b näher illustriert:
Ein Schaft 36 eines Auslassrohrs steht im Wesentlichen radial von dem Hauptrohr 32 mit kreisförmigem Durchmesser weg. Daran schließt sich ein in einem Anstellwinkel von z. B. 25° wegstehender freier Endbereich 38 an.

Aufgrund des Anstellwinkels ist gewährleistet, dass, wenn man die Verteilervorrichtung 200 an der Nebellanze 22 senkrecht in einen Windkanal stellt, nicht das Hauptrohr 32 mit seinem Windschatten und den damit erzeugten Wirbeln ein gleichmäßiges Austreten von Nebel aus den Auslassrohren 34 verhindert. Die Windrichtung des Winds im Windkanal ist durch den Pfeil 39 symbolisiert. Der austretende Nebel ist in Fig. 1 symbolisch mit Pfeilen symbolisiert, die mit 40 bezeichnet sind.

Die in Fig. 3b gezeigte Anordnung des Schafts 36 an dem Hauptrohr 32 derart, dass kein Element des Schafts 36 bzw. insgesamt des Auslassrohrs 34 ins Innere des Hauptrohrs 32 hineinragt, kann wie folgt gewährleistet werden: Vor einem Anlöten oder Anschweißen der bereits vorgeformten Auslassrohre 34 wird in das Hauptrohr 32 hilfsweise ein Rohr eingeführt, dessen Außendurchmesser im Wesentlichen dem Innendurchmesser des Hauptrohrs 32 entspricht. Dann blockiert dieses Rohr ein Einschieben des Schafts 36 ins Innere des Hauptrohrs 32 hinein. Anschließend wird das Auslassrohr 34 an dem Hauptrohr 32 befestigt (Anlöten oder Anschweißen). Sodann wird das eingangs hilfsweise eingeschobene Rohr aus dem Hauptrohr 32 wieder entnommen.

Das Hauptrohr hat bevorzugt einen Außendurchmesser von 3 mm und einen Innendurchmesser von 2,0 mm, also insgesamt eine Wanddicke von 0,5 mm. Die Auslassrohre haben bevorzugt einen Innendurchmesser von weniger als 0,6 mm. Die Auslassrohre 34 sind z. B. 10 mm lang und haben einen Abstand auf dem Hauptrohr 32 von 40 mm, bei einer Gesamtlänge des Hauptrohres ausgehend von dem Ende des Kniestücks 30 von 260 mm.

Die genannten Abmessungen sollen gewährleisten, dass das genannte Nebelfluid bei der o. g. Einheit 10 auf jeden Fall nach einer Anlaufphase erst außerhalb der Auslassrohre 34 auskondensiert, und nicht etwa noch innerhalb des Hauptrohrs 32 oder einzelner Auslassrohre 34.

Die genannten Abmessungen müssen ggf. an die Kondensationstemperatur des verwendeten Nebelfluids angepasst werden. Das Prinzip ist, dass die Wandstärken der Rohrstücke 28, 30 sowie des Hauptrohrs 32 und der Auslassrohre 34 so gewählt sind, dass sich das Fluid (Alkohol-Luft-Gemisch) nicht so stark abkühlt, dass es bereits innerhalb der Verteilervorrichtung auskondensiert. Zu geringe Wandstärken führen zu hohen Abkühlraten, haben also das Auskondensieren unerwünschterweise zur Folge.

Die Vorrichtung 100 nach Fig. 1 kann zur Visualisierung der Strömung um ein geeignetes Objekt verwendet werden. Je nach der Größe des Objekts ist eine Skalierung erforderlich. Anwendungen ergeben sich nicht nur bei der Visualisierung der Strömung um Tragflächen von Flugzeugen, um Seitenspiegel oder Heckspoiler eines Fahrzeugs, sondern auch um ganze Objekte wie Kraftfahrzeuge oder Flugzeuge.

Es versteht sich von selbst, dass bei der Visualierung von Strömungen um vollständige Objekte wie ganze Kraftfahrzeuge oder Flugzeuge die genannten Abmessungen wesentlich größer sein müssen als oben angegeben. Bei der Konstruktion der Verteilereinrichtung 200 sind daher die Nebenbedingungen (Eigenschaften der Einheit 10 und darin verwendeten Nebelfluids, Eigenschaften des Objekts und des Windkanals, Umgebungsbedingungen bei Versuchsdurchführung) zu berücksichtigen.

Die Fig. 1 zeigt noch optionale Merkmale der Vorrichtung 100, die dazu beitragen können, die Temperaturen optimal einzustellen. Hierzu ist am äußersten, also am weitesten von dem Kniestück 30 entfernten Auslassrohr 34 ein Sensor 42 vorgesehen, der die Temperatur des Auslassrohres 34 oder des daraus austretenden Fluids ermittelt. Die Messwerte werden einer Steuereinrichtung 44 zugeführt, welche sowohl über eine Steuerleitung 46 einen Aktor 48 für das Ventil 18 ansteuert, als auch über eine Leitung 50 die Heizeinrichtung 20 unmittelbar ansteuert. Somit kann die Steuereinrichtung 44 aufgrund einer Vorgabe für die Messwerte des Sensors 42 oder die sich daraus ergebenden Temperaturen (ggf. auch noch unter Hinzunahme von Parametern, die durch weitere Messeinrichtungen oder Sensoren erfasst werden) für eine optimale Einstellung der Temperatur des Fluids über die Verteilervorrichtung 200 hinweg sorgen.

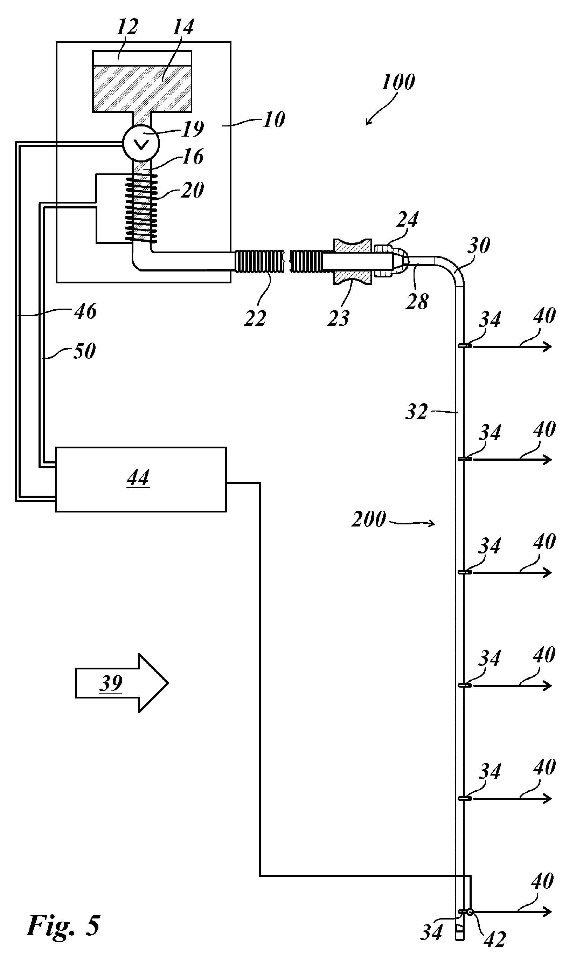

Fig. 5 zeigt ein zweites Ausführungsbeispiel der Vorrichtung 100, das wie das in Fig. 1 beschriebene Ausführungsbeispiel aufgebaut ist, mit dem Unterschied, dass anstelle eines durch einen Aktor 48 betätigbaren Ventils 18 als eine Fluidentnahme aus dem Fluidbehälter 12 beeinflussende Einrichtung eine Pumpe 19 vorgesehen ist, die das Fluid 14 aus dem Fluidbehälter 12 fördert.

Mittels der Vorrichtung 100 aus Fig. 1 und 5 wird das Konzept umgesetzt, anstelle eines relativ dicken Nebelstrahls mehrere dünne Nebelstrahlen zu erzeugen. Dadurch ist es möglich, Strömungsdetails besser sichtbar zu machen und zum anderen auch einen größeren Bereich des Strömungsgebiets zu untersuchen.

### Bezugszeichenliste

- 10: Nebelgenerator
- 12: Fluidbehälter
- 14: Fluid
- 16: Rohrabschnitt
- 18: Ventil
- 19: Pumpe
- 20: Heizeinrichtung
- 22: Nebellanze
- 23: Handhabe
- 24: Anbringelement
- 26: Schraubgewinde
- 28: Kniestück
- 30: Rohrstück
- 32: Hauptrohr
- 34: Auslassrohr
- 38: freies Ende
- 40: Nebelstrahlen
- 42: Sensor
- 44: Steuereinrichtung
- 46: Steuerleitung
- 48: Aktor
- 100: Vorrichtung zur Erzeugung von Nebelstrahlen
- 200: Verteilereinrichtung, Verteilervorrichtung

## Patentansprüche

1. Vorrichtung zum Erzeugen von Nebel, mit:
- einem Fluidbehälter (12), der zur Aufnahme eines für die Erzeugung von Nebelpartikeln durch Erhitzen geeigneten Fluids (14) dient,
- einer Heizeinrichtung (20) zum Erhitzen von Fluid in dem Fluidbehälter oder von aus dem Fluidbehälter entnommenem Fluid,
**dadurch gekennzeichnet,**
**dass** eine Verteilereinrichtung (200) mit mindestens zwei Auslässen (34) zum jeweiligen Ermöglichen des Austretens des erhitzten Fluids aus der Vorrichtung (100) vorgesehen ist.

2. Vorrichtung (100) nach Anspruch 1,
**dadurch gekennzeichnet,**
**dass** die Verteilereinrichtung (200) ein Hauptrohr (32) aufweist, von dem für jeden Auslass ein Auslassrohr (34) weg steht.

3. Vorrichtung nach Anspruch 2,
**dadurch gekennzeichnet,**
**dass** ein freies Ende (38) eines und bevorzugt jedes Auslassrohrs (34) in einer sich gegenüber einer Richtung radial von dem Hauptrohr (32) weg um einen Anstellwinkel unterscheidenden Richtung weg steht, wobei der Anstellwinkel bevorzugt zwischen 10° und 40° beträgt, besonders bevorzugt zwischen 20° und 30° beträgt.

4. Vorrichtung (100) nach Anspruch 2 oder 3,
**dadurch gekennzeichnet,**
**dass** ein und bevorzugt jedes Auslassrohr (34) zwischen 2 und 20 mm, bevorzugt zwischen 5 und 15 mm lang ist und/oder, dass ein oder bevorzugt jedes Auslassrohr (34) einen Innendurchmesser von kleiner oder gleich 1 mm, bevorzugt von kleiner oder gleich 0,8 mm, besonders bevorzugt von kleiner oder gleich 0,6 mm aufweist.

5. Vorrichtung (100) nach einem der Ansprüche 2 bis 4,
**dadurch gekennzeichnet,**
**dass** ein Abstand zwischen den Auslassrohren (34) jeweils zwischen 20 und 50 mm, bevorzugt zwischen 35 und 45 mm beträgt.

6. Vorrichtung (100) nach einem der Ansprüche 2 bis 5,
**dadurch gekennzeichnet,**
**dass** die Abmessungen des Hauptrohrs (32) und der Auslassrohre (34) und die Anordnung von Auslassrohren (34) an dem Hauptrohr (32) derart aufeinander abgestimmt sind, dass an demjenigen Auslassrohr, an dem das erhitzte Fluid die niedrigste Temperatur erreicht, diese niedrigste Temperatur bei vorbestimmten Umweltbedingungen und vorbestimmten Betriebsbedingungen bezüglich des Fluidbehälters (12) und/oder der Heizeinrichtung (20) zur Abgabe eines Nebelstrahles (40) aus diesem Auslassrohr (34) ausreicht.

7. Vorrichtung (100) nach einem der Ansprüche 2 bis 6,
**dadurch gekennzeichnet,**
**dass** ein Auslassrohr (34) ein die Temperatur des Auslassrohres (34) oder des aus ihm austretenden Fluids indirekt oder direkt messenden Sensor (42) aufweist, der mit einer Steuereinrichtung (44) gekoppelt ist, welche die Heizeinrichtung (20) und/oder eine die Fluidentnahme aus dem Fluidbehälter (12) beeinflussende sonstige Einrichtung (48, 18, 19) derart anzusteuern ausgelegt ist, dass die mittels des Sensors ermittelten Messwerte bzw. die diesen zugeordneten Temperaturwerte in einem vorbestimmten Intervall bleiben.

8. Vorrichtung (100) nach einem der Ansprüche 1 bis 7,
**dadurch gekennzeichnet,**
**dass** die Zahl der Auslässe zwischen 4 und 18, bevorzugt zwischen 5 und 8, besonders bevorzugt 6 beträgt.

9. Vorrichtung (100) nach einem der Ansprüche 1 bis 8,
**dadurch gekennzeichnet,**
**dass** die Verteilereinrichtung (200) eine Isolierung trägt, die ein Aerogel umfasst.

10. Verteilervorrichtung (200) zum Anbringen an eine Nebellanze (22) eines Nebelgenerators (10), mit einem Anbringelement (24), einem Hauptrohr (32) und mindestens zwei Auslassrohren (34), die sich von dem Hauptrohr (32) wegerstrecken.

11. Vorrichtung (100) nach Anspruch 10,
**dadurch gekennzeichnet,**
**dass** zwischen dem Anbringelement (24) und dem Hauptrohr (32) ein knieförmiges oder winkelförmiges Rohrstück (30) angeordnet ist.

12. Verteilervorrichtung (200) nach Anspruch 10 oder 11,
**dadurch gekennzeichnet,**
**dass** das Anbringelement (24) ein Schraubgewinde (26) aufweist.

13. Verfahren zum Erzeugen einer Mehrzahl von Nebelstrahlen (40) für die Sichtbarmachung von Stromlinien in einer Windkanalvorrichtung,
**dadurch gekennzeichnet,**
**dass** eine einzige Einrichtung (10) ein für die Erzeugung von Nebel geeignetes Fluid (14) aus einem Fluidbehälter (12) erhitzt und das erhitzte Fluid aus einer Mehrzahl von Auslässen, insbesondere aus Auslassrohren (34) an einem Hauptrohr (32), der Strömung in der Windkanalvorrichtung zugeführt wird.

14. Verfahren nach Anspruch 13,
**dadurch gekennzeichnet,**
**dass** die Auslassrohre (24) an einem Hauptrohr (32) einer von Hand tragbaren Verteilereinrichtung vorgesehen sind, wobei an einer Handhabe (23) der Verteilereinrichtung selbige derart gehalten wird, dass freie Enden der Auslassrohre (34) in einem Winkel von zwischen 15° und 40°, bevorzugt 20° und 30°, zur Strömungsrichtung in der Windkanalvorrichtung stehen.

15. Verfahren zum Konstruieren einer Verteilervorrichtung (200) mit den Merkmalen nach einem der Ansprüche 10 bis 12,
**dadurch gekennzeichnet,**
**dass** vorbestimmte Umweltbedingungen, insbesondere hinsichtlich der Temperatur, des vorherrschenden Luftdrucks und der Geschwindigkeit von Wind in einem Windkanal, definiert werden, dass ein Fluid ausgewählt wird und ein Nebelgenerator ausgewählt wird, der eine Vorrichtung (20) zum Erhitzen des Fluids sowie eine Nebellanze (22) aufweist, wobei bei dem Verfahren die Abmessungen des Hauptrohrs und die Anzahl und Abmessungen der Auslassrohre (34) derart gewählt werden, dass an jedem Auslassrohr (34) das erhitzte Fluid unter vorbestimmten Betriebsbedingungen die zur Erzeugung eines Nebelstrahls an dem betreffenden Auslassrohr (34) erforderliche Mindesttemperatur erreicht.
